# EUROPÄISCHE PATENTSCHRIFT

(11) **EP 0 392 495 B1**
(45) Veröffentlichungstag und Bekanntmachung des Hinweises auf die Patenterteilung: **02.03.1994**
(21) Anmeldenummer: 90106934.4
(22) Anmeldetag: 11.04.1990
(51) Int. Cl.: A21D 13/08

(54) **Verfahren zur Herstellung eines Röstbiskuiterzeugnisses**
Process for making a grilled biscuit
Procédé pour la préparation d'un biscuit grillé

(30) Priorität: 12.04.1989 DD 327544
(43) Veröffentlichungstag der Anmeldung: 17.10.1990
(73) Patentinhaber: Institut für Getreideverarbeitung GmbH, 14558 Bergholz-Rehbrücke (DE)
(72) Erfinder: Juhnke, Hubert, Dipl.-Ing., DDR-1597 Potsdam (DD); Rothe, Regina, Dipl.-Ing., DDR-1505 Bergholz-Rehbrücke (DD); Zösche, Helmut, DDR-1500 Potsdam (DD)
(74) Vertreter: Radwer, Dieter

(56) Entgegenhaltungen:
- US-A- 3 911 155
- Soviet Inventions Illustrated, Derwent Publications Ltd., Week D48, Abstract No. D11, 88966 D/48 & SU-A-810,185 (Rospishchepromavtom) May 9, 1981
- W.H. Smith: "Biscuits, crackers and cookies, Vol. 1: Technology, production and managem" 1972, London

## Beschreibung

Die Erfindung betrifft ein Verfahren zur Herstellung von Röstbiskuiterzeugnissen aus physikalisch gelockerten Biskuitmassen durch Backen, Schneiden und Rösten.
Das erfindungsgemäße Verfahren kann sowohl in kontinuierlichen Liniens stemen als auch in der diskontinuierlichen Kleinproduktion zur Herstellung bekannter Biskuiterzeugnisse eingesetzt werden.
Nach dem Verfahren lassen sich aber auch völlig neuartige, mit Dekor- oder Zusatzstoffen versehene, Biskuiterzeugnisse unterschiedlichster Formen herstellen.

Bekannte Biskuitmassen bestehen aus Vollei, Zucker, Weizenmehl, Weizenstärkepuder und gegebenenfalls weiteren Bestandteilen. Dabei wird aus Vollei und Zucker durch Einarbeiten von Luft ein Schaum mit einer Dichte von ca. 0,2 g/cm³ hergestellt, in den das Mehl und die Stärke eingearbeitet werden. Die so entstehende Masse hat eine Dichte von ca. 0,35 g/cm³.
Die Herstellung der Biskuitmasse kann diskontinuierlich oder kontinuierlich erfolgen.

Zur Herstellung von gerösteten Biskuiterzeugnissen wird eine Biskuitmasse mit einer Dichte von ca. 0,5 g/cm³ maschinell oder per Hand in spezielle Backformen gefüllt (Taschenbuch für die Bäckerei- und Dauerbackwarenherstellung, Wissenschaftliche Verlagsgesellschaft m. b. H. Stuttgart, 1958, S. 414). In dem anschließenden Backprozeß (Temperaturbereich 180 bis 220° C) wird die Schaumstruktur der Masse fixiert. Die Backzeit beträgt je nach Größe der Formen 25 bis 30 min. Nach dem Backen werden die Formen entkapselt und weggeführt. Vor einer erneuten Verwendung werden sie mit Trennfett eingesprüht. Die Einbackstangen werden zur Abkühlung in Regale gestapelt oder über aufwendige Fördereinrichtungen transportiert. Das Schneiden der gebackenen Biskuitstangen mittels Gatter- oder Bandschneidemaschinen ist erst nach einer Abkühl- und Verfestigungsphase von mindestens 180 min möglich. Es werden Scheiben von 8 bis 10 mm Dicke geschnitten. Diese werden mittels einer geeigneten Vorrichtung einzeln auf das Netzband eines Röstofens gelegt. Die Röstzeit beträgt 13 bis 15 min. An den Röstofen schließt sich die Portionierung und Verpackung an.

Der bekannte Stand der Technik weist zahlreiche Mängel auf. Sie beziehen sich insbesondere auf die Verwendung von Backformen, die vor dem Schneidprozeß notwendige Abkühlung und Zwischenlagerung sowie den aufwendigen Schneidprozeß. Daraus resultiert insgesamt ein hoher personeller, energetischer und apparativer Aufwand. So wird für das Aufheizen der Backformen eine beträchtliche Energiemenge benötigt, die für den eigentlichen Backprozeß nicht genutzt werden kann.

Aufgrund des Lockerungsgrades der Schaummasse ist bei einer Füllhöhe der Backformen von 40 bis 45 mm die Gefahr der Deformation der Porenstruktur relativ groß, d.h. je lockerer die Schaummasse, was für einen zarten Biskuit wünschenswert ist, desto größer ist die Gefahr der Deformation.

Bei einer Deformation wird aber das Porenbild uneinheitlich, woraus eine schlechte Erzeugnisqualität resultiert. Schwankungen beim Füllprozeß, die bis zu 15 % betragen können, führen zu unterschiedlichen geometrischen Abmessungen der Scheiben, was wiederum zu Störungen beim Portionieren und Verpacken bzw. zu einer hohen Aussonderungsrate führt.
Das Entkapseln der Backformen erfordert entweder schwere körperliche Arbeit oder aufwendige mechanisierte Vorrichtungen. Beim Fetten der Backformen besteht die Gefahr der Überfettung, insbesondere in Ecken und Kanten, was eine Qualitätseinbuße zur Folge hat. Ein wesentlicher Nachteil des bekannten Standes der Technik ist auch die notwendige Zwischenlagerung der gebackenen Biskuitstangen zur Abkühlung und Alterung, die eine erhebliche Produktionsfläche erfordert. Sie ist mit hohem personellem oder apparativem Aufwand verbunden; dies betrifft ebenso die Zuführung zur Schneidmaschine. Nachteilig beim Schneiden der Stangen ist außerdem, daß eine Dicke der Scheiben < 8 mm praktisch nicht erreicht werden kann, da die erforderliche Verarbeitungsstabilität, d.h. Formstabilität der gebackenen Biskuitmasse nicht gegeben ist.

Lösungsvorschläge zur Beseitigung der aufgeführten Mängel bei der Herstellung von Röstbiskuiterzeugnissen sind nicht bekannt.

Der Erfindung liegt die Aufgabe zugrunde, Verfahrensbedingungen aufzuzeigen, die ohne Zwischenkühlung und -lagerung der gebackenen Biskuitmasse und bei gleichzeitiger Senkung des Aufwandes zum Schneiden der gebackenen Masse die Herstellung eines breiten Sortimentes von Röstbiskuiterzeugnissen gestatten.

Erfindungsgemäß wird die Aufgabe in der Weise gelöst, daß eine Biskuitmasse mit einer Dichte von 0,35 bis 0,6 g/cm³ als Masseband flächig in beliebiger Breite und einer Dicke, die der Dicke der vorgesehenen Erzeugnisse entspricht, auf einen Backgutträger aufgebracht und gleichzeitig die Oberfläche mit wasserabsorbierenden Stoffen bzw. Stoffgemischen versehen sowie die Masse 7 bis 12 min gebacken wird. Gegebenenfalls wird auch die gebackene Masse mit wasserabsorbierenden Stoffen bzw. Stoffgemischen und/oder Dekormaterial versehen und ohne Zwischenkühlung durch Schneiden, Ausstechen oder andere Trennvorgänge in beliebige Formen geteilt und anschließend sofort in bekannter Weise geröstet. Ausführungsvarianten der Erfindung sehen vor, daß außer dem Aufbringen von wasserabsorbierenden Stoffen, wie zum Beispiel Brösel, vor dem Backen auch nach dem Backen, also vor dem Rösten, nochmals weitere wasserabsorbierende Stoffe, die gleichzeitig als Dekormaterial wirken, wie zum Beispiel Kokosraspel, Mandelsplitter u.ä., auf die Oberfläche der Biskuitmasse aufgebracht werden. Nach dem Rösten ist ein Dekorieren der Erzeugnisse, z.B. mit Schokoladentunkmasse, Hartfettglasur und ähnlichen Stoffen, ebenfalls noch möglich.

Es wurde gefunden, daß die Herstellung von Röstbiskuiterzeugnissen in einem durchgängigen Produktionsprozeß ohne ein Backen in Backformen und vor allem ohne Zwischenkühlung dann möglich ist, wenn die physikalisch gelockerte Biskuitmasse, eine gute Lockerung des Vollei-Zuckerschaumes ist Voraussetzung für die erfindungsgemäße Verfahrensweise, flächig in gleichmäßiger Dicke auf einen Backgutträger, z.B. auf das Stahlband eines Durchlaufbackofens oder auch auf Backbleche aufgebracht wird und mit einer Backdauer von 7 bis 12 min, soweit thermisch fixiert wird, daß sie in noch warmem Zustand geschnitten oder auch in anderer Weise, z.B. mittels Ausstecher oder Ausstechwalze, in die Form der gewünschten Enderzeugnisse gebracht und anschließend sofort geröstet wird.

Ein wesentliches Merkmal der Erfindung ist dabei die gezielte Beeinflussung der Oberfläche der Biskuitmasse. Sie erfolgt in der Weise, daß durch Aufbringen von wasserabsorbierenden Stoffen auf die Oberfläche der Biskuitmasse vor und gegebenenfalls auch nach dem Backen das Feuchteniveau der Masse so reguliert wird, daß die sich während des Backprozesses festigende Schaumstruktur ein Schneiden bzw. Trennen der gebackenen Masse in noch warmem Zustand gestattet. Durch die wasserabsorbierenden Stoffe, sehr gut geeignet sind z.B. Brösel mit einer Feuchte von 3 %, wird die Oberfläche des Massebandes vergrößert und gleichzeitig erfolgt durch die Brösel eine Wasseraufnahme von der Biskuitmasse, die auch eine schnellere Wasser- bzw. Wasserdampfabgabe aus dem Teiginneren nach außen zur Folge hat. Damit wird der Feuchteanteil im Inneren der Biskuitmasse noch vor Erreichen der Backtemperatur herabgesetzt, was insgesamt zu einer Verringerung der Feuchtedifferenz zwischen Oberfläche und Innerem der Biskuitmasse führt.

Unterstützt werden kann die Vergrößerung der Oberfläche durch mechanische Behandlung der Oberfläche, z.B. mittels Igelwalze. Diese Verfahrensweise führt zu einer in noch warmem Zustand schnittfesten Biskuitmasse und zu ausgezeichneten Erzeugnissen nach dem Rösten.
Ein entscheidender Vorteil des erfindungsgemäßen Verfahrens besteht darin, daß es kontinuierlich durchgeführt werden kann, aber auch eine diskontinuierliche Arbeitsweise bei durchgängingem Produktionsprozeß, d.h. ohne Produktionsunterbrechung durch Zwischenlagerung, gestattet.
Wesentlich ist die Energieeinsparung des Verfahrens gegenüber dem bekannten Stand der Technik. Sie resultiert nicht nur aus einer Verkürzung der Backzeit auf Grund des Backens eines Massebandes, sondern die Verkürzung der Backzeit ist auch eine Folge der gezielten Beeinflussung der Oberfläche der Biskuitmasse zur Regulierung des Feuchteniveaus und damit des Back- und Röstverhaltens der Biskuitmasse als Voraussetzung für das Schneiden im warmen Zustand und die Übergabe noch warmer Halbfertigerzeugnisse auf den Röstofen. Da beim Backprozeß keine Backformen mehr aufgeheizt werden müssen, ergibt sich eine weitere Energieeinsparung.

Im Gegensatz zu den bekannten Verfahren des Backens von Biskuitmasse in Backformen für Röstbiskuitscheiben, z.B. der Größe 45 x 65 x 8 mm und dem Schneiden der gebackenen Stangen nach einer Abkühlzeit von mehreren Stunden, ist die Oberfläche des erfindungsgemäß hergestellten Erzeugnisses vor dem Rösten weitgehend identisch mit der Oberfläche der Erzeugnisse nach dem Rösten. Dies ist ein wesentlicher Vorteil des Verfahrens, denn das Backen als kontinuierliches Masseband, z.B. mit einer Dicke von 4 bis 8 mm, läßt nicht nur eine Vielfalt an möglichen Erzeugnisformen durch Trennen und Schneiden oder Ausstechen in unterschiedlichen Abmessungen zu, sondern die erfindungsgemäße Verwendung von wasserabsorbierenden Stoffen zur Beeinflussung der Feuchtedifferenz in der Masse bieten die Möglichkeit, diese Stoffe gezielt zur Dekorgestaltung und Aromatisierung der Erzeugnisse einzusetzen, d.h. es lassen sich Erzeugnisse mit völlig neuartigem Charakter herstellen. Dieses bietet die Möglichkeit einer Sortimentserweiterung.

Ein weiterer Vorteil des Verfahrens ist die Möglichkeit, besondere dünne Röstbiskuitscheiben herzustellen, da die Schneidstärkebegrenzung bei den bekannten Schneidaggregaten zum Schneiden von Biskuitstangen und die notwendige Formstabilität der gebackenen Biskuitmasse keine Rolle mehr spielen.
Ein ganz wesentlicher Vorteil des erfindungsgemäßen Verfahrens ist aber die durchgängige Gestaltung des Produktionsprozesses, die durch das Schneiden oder Ausstechen eines Biskuitbandes mit der für das jeweilige Erzeugnis gewünschten Dicke im warmen Zustand und damit ohne Zwischenlagerung zur Kühlung möglich wird.

Die Erfindung wird anhand von mehreren Ausführungsbeispielen erläutert.

### Beispiel 1

Aus Vollei, Zucker, Mehl, Stärke und Aromen wird eine Biskuitmasse in bekannter Weise hergestellt. Die Masse hat eine Dichte von 0,35 g/cm³. Für die Linienproduktion wird die Masse mittels Walzenpaar auf das Stahlband eines Durchlaufbackofens flächig aufgetragen. Die Höhe des Massebandes wird auf 6 mm eingestellt.
Vor dem Backprozeß wird über eine Dosiervorrichtung zur Vergrößerung der Oberfläche und zur Wasserabsorption eine dünne Schicht von fein zerkleinerten Bröseln aufgestreuselt. Vorteilhafterweise werden Brösel in Form von zerkleinertem Röstbiskuitbruch (Schneidabfälle) verwendet. Diese Trockenstoffschicht verbindet sich aufgrund der Wasseraufnahme an der Oberfläche mit der ungebackenen Masse. Nach dem Backprozeß bilden Brösel und Masse eine Einheit.
Die Backdauer beträgt 9 min bei einem Temperaturbereich von 170 bis 190° C. Nach dieser thermischen Fixierung werden mittels Ausstechvorrichtung die gewünschten Gebäckformen ausgestanzt. Die Kanten und eventuelle Schnittrückstände werden entweder sofort oder an einer anderen Stelle des technologischen Gesamtprozesses weggeführt.

Die Biskuitscheiben werden direkt dem Röstofen zugeführt und durchlaufen der Erzeugnischarakteristik entsprechend in 12 min diese Prozeßstufe.
Die Bandgeschwindigkeit des Röstofens ist um ca. 0,1 m min⁻¹ schneller als die des Backofens. Die gleichmäßige Ofenbelegung und die verfahrensbedingt exakt gleichgroßen Röstbiskuitstücke bieten gute Voraussetzungen für eine automatisierte Verpackungstechnologie.
Die Erzeugnisse werden röstfrisch verpackt.

### Beispiel 2

Die Biskuitmasse wird wie in Beispiel 1 hergestellt. Für die Linienproduktion wird die Masse auf das Stahlband eines Durchlaufbackofens in 5 mm Stärke aufgetragen, mit Bröseln bestreut und im Durchlaufbackofen bei einem Temperaturbereich von 170 bis 190° C gebacken.

Nach dem Backprozeß wird das Backgut mit geriebenen Nüssen, die eine relativ hohe Wasseraufnahmefähigkeit besitzen, bestreut.Als Bindemittel wird hochkonzentrierter Sirup eingesetzt.

Das fixierte belegte Masseband mit einer Breite von 960 mm wird einer Längsschneideeinrichtung zugeführt. Angetriebene Kreismesser schneiden 25 mm breite Streifen. In der anschließenden Querschneidvorrichtung werden die Streifen mittels Hackmesser in gleichlange Stücke geteilt. Das Hackmesser ist mit dem Bandantrieb synchron geschaltet, so daß bei Änderung der Bandgeschwindigkeit die exakte Trennlänge eingehalten wird.

### Beispiel 3

Mit dem erfindungsgemäßen Verfahren ist die Herstellung von Röstbiskuiterzeugnissen mit speziellem Charakter möglich. In diesem Beispiel wird das Verfahren zur Herstellung von Kokos-Röstbiskuit beschrieben.
Es wird in bekannter Weise eine Biskuitmasse mit einer Dichte von 0,5 g/cm³ hergestellt. Die Masse wird mittels Aufgabevorrichtung mit regulierbarem Dosierschlitz auf ein Backblech aufgetragen. Die Höhe des Massebandes beträgt 4 mm. Auf die ungebackene Masse werden mittels einer Bestreuselungsvorrichtung Kokosraspeln aufgetragen.
Im anschließenden Backprozeß wird bei einer konstanten Temperatur von 180° C in 7 min die Masse thermisch fixiert. Die Bleche werden nachfolgend einer Stanze übergeben, in der die endgültige Gebäckform erzielt wird.
Der abschließende Röstprozeß erfolgt auf Gittern oder Lochblechen.

## Patentansprüche

1. Verfahren zur Herstellung von Röstbiskuiterzeugnissen aus physikalisch gelockerten Biskuitmassen durch Backen, Schneiden und Rösten, dadurch gekennzeichnet, daß eine Biskuitmasse mit einer Dichte von 0,35 bis 0,6 g/cm³ als Masseband in beliebiger Breite und einer Dicke, die der Dicke der vorgesehenen Erzeugnisse entspricht, auf einen Backgutträger aufgebracht und gleichzeitig die Oberfläche mit wasserabsorbierenden Stoffen bzw. Stoffgemischen versehen und anschließend die Masse 7 bis 12 min gebacken wird, gegebenenfalls auch die gebackene Masse mit wasserabsorbierenden Stoffen bzw. Stoffgemischen und/oder Dekormaterial versehen wird und ohne Zwischenlagerung und Kühlung durch Schneiden, Ausstechen oder andere Trennvorgänge in beliebige Formen geteilt und anschließend sofort geröstet wird.

2. Verfahren nach Anspruch 1, dadurch gekennzeichnet, daß die Biskuitmasse mit einer Dicke von 4 bis 8 mm als Masseband aufgetragen wird.

3. Verfahren nach Anspruch 1, dadurch gekennzeichnet, daß eine Biskuitmasse sowohl kontinuierlich auf ein Stahlband eines Durchlaufbackofens als auch diskontinuierlich auf Backbleche aufgebracht wird.

4. Verfahren nach Anspruch 1, dadurch gekennzeichnet, daß als wasserabsorbierende Stoffe bzw. Stoffgemische und/oder als Dekormaterial Brösel, Kokosraspeln, Mandelsplitter und ähnliche Stoffe eingesetzt werden.

## Claims

1. Process for the production of rusks from physically leavened cake batter by baking, slicing and roasting, wherein the cake batter of a density of 0.35 to 0.6 g/cm³ is spread on a product carrier as belt of any width and thickness which corresponds to the thickness of the end product, at the same time the surface is coated with a water absorbing agent or mixture, the mass is baked subsequently for 7 to 12 minutes, if necessary the baked mass is coated with a water absorbing agent or mixture and/or a decorating material, and without intermediate storage and cooling is divided into any shapes by slicing, stamping or other cutting procedures, and roasted immediately.

2. Process according to claim 1, wherein the cake batter is spread as belt of a thickness of 4 to 8 mm.

3. Process according to claim 1, wherein the cake batter is spread either continuously on the steel belt of a tunnel oven or discontinuously on baking trays.

4. Process according to claim 1, wherein crumbs, coconut flakes, almond raspings and similar material is used as water absorbing agents or mixtures and/or as decorating material.

## Revendications

1. Procédé pour la préparation de biscuits grillés à partir de pâte à biscuit physiquement molle par cuisson, découpage et grillage, caractérisé en ce qu'une pâte à biscuit d'une densité de 0,35 à 0,6 g/cm³ est appliquée sous forme d'une bande de pâte d'une largeur quelconque et d'une épaisseur qui correspond à l'épaisseur des produits prévus, sur un support à gâteaux et simultanément on enduit la surface de substances ou de mélanges de substances absorbant l'eau et on procède ensuite à la cuisson de la pâte pendant 7 à 12 minutes, le cas échéant on ajoute également à la pâte cuite des substances ou mélanges de substances absorbant l'eau et/ou des substances décoratives et l'on procède sans stockage intermédiaire à la division par coupage, découpage ou autres procédés de séparation et consécutivement on procède aussitôt au grillage.

2. Procédé selon la revendication 1, caractérisé en ce que la pâte à biscuit est appliquée avec une épaisseur de 4 à 8 mm sous forme de bande de pâte.

3. Procédé selon la revendication 1, caractérisé en ce que l'on applique une pâte à biscuit aussi bien de façon continue sur une bande métallique d'un four de cuisson traversant que sous la forme discontinue sur des plaques de cuisson.

4. Procédé selon la revendication 1, caractérisé en ce qu'en tant que substances ou mélanges de substances absorbant l'eau et/ou de substances décoratives, on fait appel à des miettes de pain, des noix de coco râpées, des éclats d'amande et matières analogues.
